(19) Europäisches Patentamt
European Patent Office
Office européen des brevets

(11) **EP 3 195 007 B1**

(12) **FASCICULE DE BREVET EUROPEEN**

(45) Date de publication et mention
de la délivrance du brevet:
**30.10.2019 Bulletin 2019/44**

(51) Int Cl.:
***G01S 13/34*** *(2006.01)*

(21) Numéro de dépôt: **15763602.8**

(22) Date de dépôt: **16.09.2015**

(86) Numéro de dépôt international:
**PCT/EP2015/071225**

(87) Numéro de publication internationale:
**WO 2016/042030 (24.03.2016 Gazette 2016/12)**

(54) **PROCÉDÉ RADAR POUR ESTIMATION DE LA TAILLE DE BLOCS ROCHEUX EN CHUTE**

RADARVERFAHREN ZUR SCHÄTZUNG DER GRÖSSE VON HERABFALLENDEN GESTEINSBLÖCKEN

RADAR METHOD FOR ESTIMATING THE SIZE OF FALLING ROCKY BLOCKS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.09.2014 FR 1458746**

(43) Date de publication de la demande:
**26.07.2017 Bulletin 2017/30**

(73) Titulaire: **Office National d'Etudes et de Recherches Aérospatiales (ONERA)
91120 Palaiseau (FR)**

(72) Inventeur: **LEMAITRE, François
F-31650 Lauzerville (FR)**

(74) Mandataire: **Regimbeau
20, rue de Chazelles
75847 Paris Cedex 17 (FR)**

(56) Documents cités:
- HUIZHANG ET AL: "Three-frequency principle for automotive radar system", PROCEEDINGS. 2004 IEEE RADIO AND WIRELESS CONFERENCE (IEEE CAT. NO.04TH8746), 1 janvier 2004 (2004-01-01), pages 315-318, XP055193343, DOI: 10.1109/RAWCON.2004.1389139 ISBN: 978-0-78-038451-4
- Merrill I. Skolnik: "Chapter three: CW and Frequency-Modulated Radar" In: "Introduction To Radar Systems", 1 janvier 1981 (1981-01-01), McGraw Hill, XP055047545, ISBN: 978-0-07-057909-5 pages 68-100, sec. 3.5
- GUO-WEI SHEN ET AL: "MFCW Ranging Technology and the Method of Ambiguity Resolution", MODERN RADAR, vol. 26, no. 2, 1 février 2004 (2004-02-01), pages 35-36, XP055193349,
- PIERACCINI ET AL: "Static and dynamic testing of bridges through microwave interferometry", NDT & E INTERNATIONAL, BUTTERWORTH-HEINEMANN, OXFORD, GB, vol. 40, no. 3, 14 février 2007 (2007-02-14), pages 208-214, XP005890958, ISSN: 0963-8695, DOI: 10.1016/J.NDTEINT.2006.10.007
- REEVES B A ET AL: "Developments in monitoring mine slope stability using radar interferometry", GEOSCIENCE AND REMOTE SENSING SYMPOSIUN, 2000. PROCEEDINGS. IGARSS 2000. IEEE 2000 INTERNATIONAL 24-28 JULY 2000, PISCATAWAY, NJ, USA,IEEE, vol. 5, 24 juillet 2000 (2000-07-24), pages 2325-2327, XP010503983, DOI: 10.1109/IGARSS.2000.858397 ISBN: 978-0-7803-6359-5
- NORLAND R ED - MOLINIER M ET AL: "Differential Interferometric Radar for Mountain Rock Slide Hazard Monitoring", GEOSCIENCE AND REMOTE SENSING SYMPOSIUM, 2006. IGARSS 2006. IEEE INTER NATIONAL CONFERENCE ON, IEEE, PI, 1 juillet 2006 (2006-07-01), pages 3293-3296, XP031179724, DOI: 10.1109/IGARSS.2006.846 ISBN: 978-0-7803-9510-7

EP 3 195 007 B1

**Description**

DOMAINE TECHNIQUE GENERAL

L'invention concerne le domaine technique de la surveillance radar et en particulier la surveillance de sites instables. En particulier l'invention est relative aux procédés et dispositifs pour la surveillance de sites instables rocheux.

ETAT DE L'ART

Par "site instable", on désigne ici et dans toute la suite du texte toute zone terrestre qui fait l'objet de modifications dans le temps, que cette zone soit naturelle ou non, que ces modifications correspondent à des mouvements de grande échelle (fissuration d'un sol par exemple) ou qu'elles soient localisées dans le temps ou en certaines parties de la zone (chutes de blocs rocheux par exemple).

L'invention trouve notamment avantageusement application en volcanologie et sismologie.

Elle trouve également avantageusement application pour la surveillance de zones de sol naturel présentant des risques importants de chutes de blocs rocheux.

Un exemple d'utilisation sera pris avec les lignes de chemins de fer surplombées par des sites rocheux instables et sur lesquelles circulent notamment des trains à grande vitesse. Lorsqu'un rocher se détache du site et vient encombrer la voie, il existe un risque important d'endommagement de la locomotive et des rails. Il est ainsi souhaitable de savoir à chaque instant si la voie est dégagée.

Des dispositifs en forme de filets maillés en fil conducteur de courant sont couramment observés aux abords des chemins de fer. Le maillage de ces derniers, typiquement de 15 cm, se casse lorsqu'un rocher supérieur à la dimension du maillage vient au contact du dispositif. Une coupure de courant est ainsi observée, ce qui permet d'alerter un opérateur quant à la présence d'un rocher supérieur à 15 cm à un certain endroit sur les voies. La valeur de 15 cm est la taille maximale acceptable pour que la locomotive puisse pulvériser le rocher sans être endommagée. Un rocher plus grand impose une intervention pour dégager la voie.

Malheureusement quand un tel rocher est détecté trop tard et qu'un train se dirige vers la zone encombrée, un freinage d'urgence peut être déclenché afin de limiter les dommages de la locomotive. Mais un freinage d'urgence provoque une dégradation de la voie.

Il est nécessaire de pouvoir détecter le plus tôt possible si un rocher nécessitant une intervention d'un opérateur est sur la voie.

En ce qui concerne l'obtention de la trajectoire, il existe d'autres dispositifs. Des distances-mètres optiques ont été utilisés en sismologie et volcanologie mais avec leur mire coûteuse et fragile, ils ne sont pas adaptés pour être laissés à demeure sur les sites et en outre ils ne permettent que des mesures ponctuelles dans le temps et l'espace et ne donnent aucune information sur la taille du rocher.

Le document US 4 300 121 propose une surveillance radar d'un site rocheux instable en analysant les échos des ondes électromagnétiques émises par le radar et réfléchies par le rocher mais il ne permet pas de suivre l'évolution d'un point particulier ni d'avoir une estimation de la dimension.

Le document HUI ZHANG ET AL ("Three-frequency principle for automotive radar system", PROCEEDINGS. 2004 IEEE RADIO AND WIRELESS CONFERENCE (IEEE CAT. N0.04TH8746), 1 janvier 2004 (2004-01-01), pages 315-318, DOI: 0.1109/RAWC0N.2004.1389139, ISBN: 978-0-78-038451-4) décrit une technologie fondée sur un écho suppose ponctuel animé d'une vitesse supposée uniforme, permettant de calculer simplement les effets Doppler sur les signaux. En outre, ce document ne permet pas d'avoir une estimation sur la dimension de l'objet.

Le document Merrill I. Skolnik ("Chapter three: CW and Frequency-Modulated Radar" In: "Introduction To Radar Systems", 1 janvier 1981 (1981-01-01), McGraw Hill, ISBN: 978-0-07-057909-5, pages 68-100) décrit de la même façon un traitement fondé sur une hypothèse d'un écho ponctuel et d'une analyse de différence de phase.

Enfin, le brevet EP 0 811 854, à l'aide d'un radar également, permet d'établir la trajectoire d'un rocher mais il ne permet pas d'obtenir la taille de ce dernier. Or il existe un besoin d'identifier le plus rapidement possible si un rocher de taille supérieure à une dimension donnée présente un danger.

PRESENTATION DE L'INVENTION

L'invention permet de pallier les inconvénients ci-dessus mentionnés et propose à cet effet un procédé de surveillance d'une cellule élémentaire d'un site, au moyen d'un dispositif de surveillance comprenant un émetteur et un récepteur d'ondes électromagnétiques, le procédé comprenant les étapes suivantes mises en œuvre dans une unité de traitement :

    a) émission vers la cellule élémentaire à surveiller, au moyen de l'émetteur, d'au moins trois ondes électromagnétiques de fréquences respectives différentes et telles que la longueur d'onde associée à une première fréquence de battement définie par la différence entre une première et une deuxième desdites fréquences est supérieure à la taille radiale de la cellule élémentaire;

    b) réception cohérente, au moyen du récepteur, des ondes réfléchies issues de la réflexion des ondes sur la cellule surveillée ;

    c) traitement des ondes réfléchies pour détecter un mouvement d'un objet comprenant une dimension, en rotation et diffractant, dans la cellule élémentaire et estimer sa position dans la cellule élémentaire, ledit traitement déterminant

l'argument d'une moyenne temporelle d'une corrélation entre deux ondes correspondant à la première fréquence de battement pour en déduire la position de l'objet en mouvement,
le module d'une moyenne temporelle d'une corrélation entre deux ondes correspondant à une deuxième fréquence de battement pour en déduire la dimension de l'objet en mouvement, ladite deuxième fréquence de battement étant définie par la différence entre la troisième des trois fréquences et l'une des deux autres.

Un but de l'invention est ainsi de pouvoir caractériser la dimension d'un rocher, en plus de connaître sa trajectoire. Il est ainsi possible d'estimer dès le départ de la chute du rocher, dans le cas des voies de chemins de fer, s'il faudra effectuer un freinage d'urgence ou non.

Le procédé selon l'invention peut comprendre les caractéristiques suivantes prises seules ou en combinaison :

- ledit traitement est adapté pour caractériser la dimension dudit objet par rapport à une dimension seuil comprise entre la moitié de la longueur d'onde associée à la deuxième fréquence de battement et deux fois celle-ci,

- ledit traitement est adapté pour estimer la dimension dudit objet si ladite dimension est comprise entre la moitié de la longueur d'onde associée à la deuxième fréquence de battement et deux fois celle-ci,

- on émet, outre les trois ondes, une quatrième onde dont la fréquence est telle que la fréquence de battement définie par la différence entre la troisième fréquence et cette quatrième fréquence est égale à la première fréquence de battement, la fréquence de battement définie comme la différence entre cette quatrième fréquence et l'une des deux premières étant égale à la deuxième fréquence de battement, le procédé comprenant la réception de l'onde réfléchie par le récepteur après réflexion de l'onde émise, le traitement mettant en œuvre une vérification de ce que le mouvement détecté est relatif à un unique objet,

- la vérification de ce que le mouvement détecté est relatif à un unique objet met en œuvre une comparaison des corrélations entre les ondes réfléchies correspondant à la première fréquence de battement et/ou les ondes réfléchies correspondant à la deuxième fréquence de battement,

- le traitement des ondes réfléchies comprend une étape de filtrage passe-haut des ondes réfléchies pour supprimer des composantes desdites ondes réfléchies sur au moins un objet(s) fixe(s) ou quasi-fixe(s) dans la cellule élémentaire,

- la deuxième fréquence de battement est comprise entre 10 MHz et 10 GHz, la longueur d'onde associée étant comprise entre 15 mm et 15 m,

- la première fréquence de battement est comprise entre 0,1 MHz et 100 MHz, la taille radiale de la cellule élémentaire à surveiller étant comprise entre 1m et 1km.

L'invention propose aussi un dispositif de surveillance d'une cellule élémentaire comprenant :

- un émetteur d'ondes électromagnétiques, configuré pour émettre des ondes électromagnétiques,
- un récepteur cohérent d'ondes électromagnétiques, configuré pour recevoir des ondes électromagnétiques réfléchies,
- une unité de traitement configurée pour mettre en œuvre un procédé tel que décrit précédemment.

PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :

- La figure 1 illustre un site instable à surveiller au moyen d'un procédé et un dispositif conformes à l'invention ;
- La figure 2 illustre en trois dimensions les formes géométriques de cellules élémentaires d'un site instable à surveiller au moyen d'un procédé et un dispositif conformes à l'invention ;
- La figure 3 illustre des propriétés géométriques d'un objet en mouvement dans le site à surveiller ;
- La figure 4 illustre des étapes d'un procédé de surveillance d'un site conforme à l'invention selon un premier mode de réalisation ;
- La figure 5 illustrent un axe sur lequel sont réparties des fréquences $f_1$, $f_2$ et $f_3$ des ondes électromagnétiques impliquées dans un procédé selon un premier mode de réalisation de l'invention ;
- Les figures 6a et 6b illustrent des courbes représentant une dimension de l'objet en mouvement du site à surveiller en fonction du module du coefficient de corrélation entre des ondes impliqués dans un procédé conforme à l'invention;
- La figure 7 illustre un axe sur lequel sont réparties les fréquences $f_1$, $f_2$, $f_3$ et $f_4$ des ondes électromagnétiques impliquées dans un procédé selon un second mode de réalisation de l'invention.

## DESCRIPTION DETAILLEE

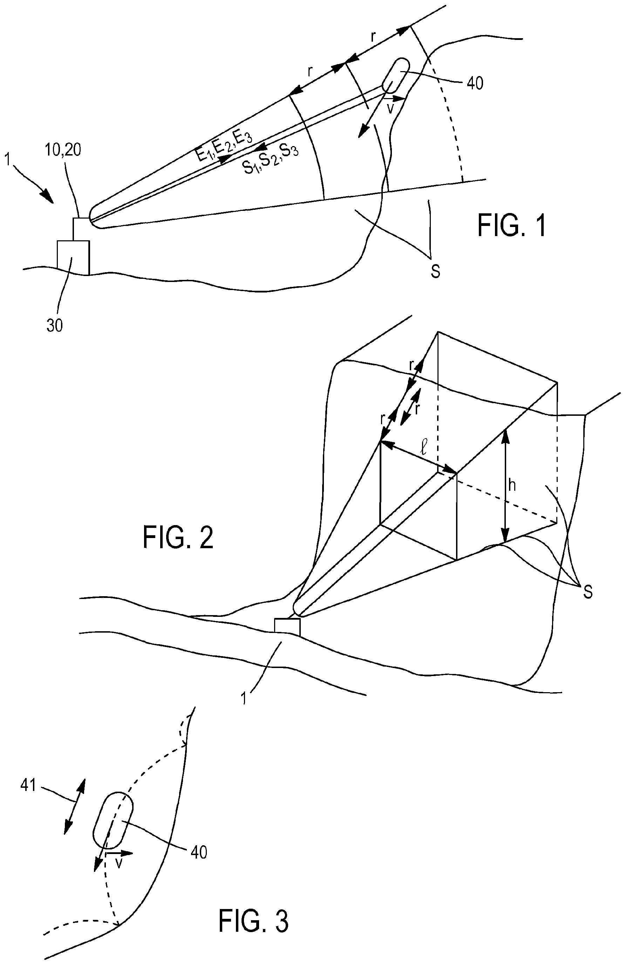

La **figure 1** illustre une surveillance d'un site comprenant un objet, typiquement un rocher 40 (ou bloc rocheux) que l'on surveille au moyen d'un dispositif 1 de surveillance.

### Le dispositif 1

Le dispositif 1 comprend un émetteur d'ondes électromagnétiques 10, configuré pour émettre des ondes électromagnétiques, un récepteur d'ondes électromagnétiques 20, configuré pour recevoir des ondes électromagnétiques réfléchies, et une unité de traitement 30. Afin de surveiller le site et notamment le rocher 40, on dispose le dispositif 1 à un point d'observation O de sorte qu'il puisse émettre des ondes électromagnétiques vers le site. Il est néanmoins possible de placer l'émetteur 10 et le récepteur 20 à des endroits différents.

L'émetteur d'ondes électromagnétiques 10 et le récepteur 20 forment généralement un radar monostatique. En particulier, l'émetteur 10 est compatible d'une émission large bande. Il comporte une ou plusieurs antennes d'émission et de réception à réflecteur parabolique. Chaque antenne a un gain d'environ 30 dB et un angle d'ouverture à 3dB de l'ordre de 1,7°. Le champ éclairé par le radar à 1km a un diamètre d'environ 30m. Une lunette de visée facilite le pointage du radar vers le site à surveiller.

L'émetteur 10 peut émettre différentes formes d'ondes connues de l'homme du métier, par exemple multifréquence ou avec modulations linéaires de fréquence montantes et descendantes.

Les ondes électromagnétiques $E_1$, $E_2$ ou $E_3$, de fréquences respectives $f_1$, $f_2$, $f_3$ différentes, émises par l'émetteur 10 sont réfléchies par des éléments du site, notamment le rocher 40, pour revenir sous forme d'ondes réfléchies $S_1$, $S_2$ ou $S_3$ au récepteur 20.

L'unité de traitement 30 est configurée pour déclencher les émissions d'ondes électromagnétiques et pour effectuer l'analyse des ondes reçues.

### Le site à surveiller

Comme illustré sur la **figure 2,** le site à surveiller est décomposé en un ensemble de cellules élémentaires S, chaque cellule élémentaire étant un volume défini par une largeur moyenne I, une hauteur moyenne h et une taille radiale r (ou profondeur). Les cellules élémentaires S sont typiquement des cases distance, selon la terminologie consacrée. La largeur et la hauteur d'une cellule élémentaire S surveillée dépendent des angles d'émission utilisés par l'émetteur 10. La taille radiale r (ou profondeur) est liée à la fenêtre temporelle de réception du récepteur 20, i.e. au début de l'acquisition et à la durée d'acquisition. Les cellules élémentaires ou cases distance peuvent se recouvrir partiellement. Les signaux issus des différentes cases distance S sont traités en parallèle.

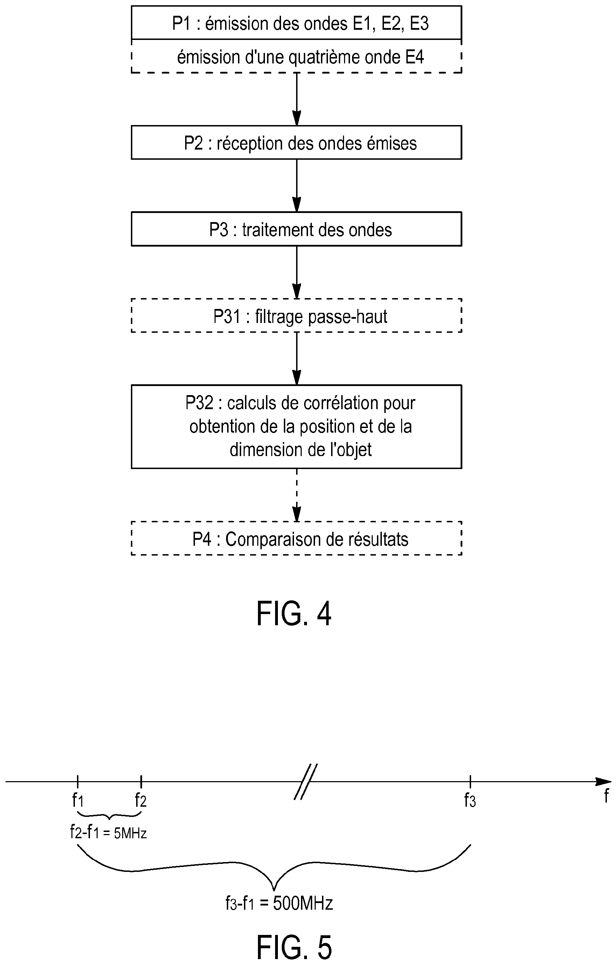

Pour bien localiser la position radiale de l'objet en mouvement à l'intérieur de la case distance S, il faut que la profondeur r de la case distance S soit inférieure à la longueur d'onde associée au battement de la paire de fréquences utilisée ($f_2$-$f_1$ pour la **figure 5**). De cette façon, la phase de la fonction d'intercorrélation ne peut pas effectuer plus d'un tour (360°) à l'intérieur de la case distance S, ce qui assure l'unicité de la valeur de la position radiale.

### L'objet surveillé

En relation avec la **figure 3** et comme mentionné précédemment, l'objet 40 surveillé est typiquement le rocher 40. Il peut néanmoins s'agir de n'importe quel élément pouvant se mettre en mouvement, le mouvement pouvant être nul, et dit diffractant, c'est-à-dire pouvant réfléchir les ondes électromagnétiques. Quand le rocher 40 se met en mouvement dans le site et donc dans une case distance S, le mouvement étant typiquement une chute, il se met en rotation autour d'un axe de rotation. On peut ainsi lui définir une dimension 41 qui est la taille maximale du rocher perpendiculairement autour dudit axe de rotation. Cette dimension 41 est généralement la taille maximale du rocher 40, c'est-à-dire la distance maximale reliant deux points du rocher 40. On peut ainsi définir comme l'objet 40 comme « étendu ». On définit la vitesse v du rocher 40 comme la vitesse de son centre de gravité et on définit la position radiale de l'objet 40 ou du rocher 40 comme la composante de la position de l'objet projetée sur l'axe entre le récepteur 20 et l'objet 40. Le suivi dans le temps de la position radiale de l'objet 40 s'effectue sur l'ensemble des cases distance S et permet donc de savoir si l'objet se rapproche ou non du récepteur 20.

### Procédé de détection

A présent, un procédé de détection de mouvement d'objets diffractant dans un site à surveiller va être décrit en relation avec la **figure 4.**

Dans une première étape **P1,** l'émetteur 10 émet en direction d'une case distance au moins trois ondes électromagnétiques $E_1$, $E_2$, $E_3$, de fréquences respectives $f_1$, $f_2$, $f_3$, différentes. Les ondes sont émises simultanément ou successivement, potentiellement sous forme d'une onde complexe superposant les trois ondes $E_1$, $E_2$, $E_3$.

On définit une première fréquence de battement par la différence $|f_2-f_1|$ entre une première et une deuxième desdites fréquences. Cette première fréquence de battement est telle que la longueur d'onde associée est supérieure ou égale à la taille radiale r de la case distance S utilisée. En effet, ainsi qu'il l'a été expliqué précédemment, à l'intérieur de la case distance S, il ne faut pas que le déphasage entre $S_1$ et $S_2$ varie de plus de 360°.

Typiquement, la première fréquence de battement est comprise entre 0,1 MHz et 100 MHz, ce qui correspond à une taille radiale r de la profondeur de la case distance comprise entre 1m et 1km. Typiquement, la première fréquence de battement est de l'ordre de 5 MHz, soit une taille radiale r de la case distance S inférieure à 30m.

On définit une deuxième fréquence de battement $|f_3-f_1|$ ou $|f_3-f_2|$ définie par la différence entre la troisième des trois fréquences et l'une des deux autres.

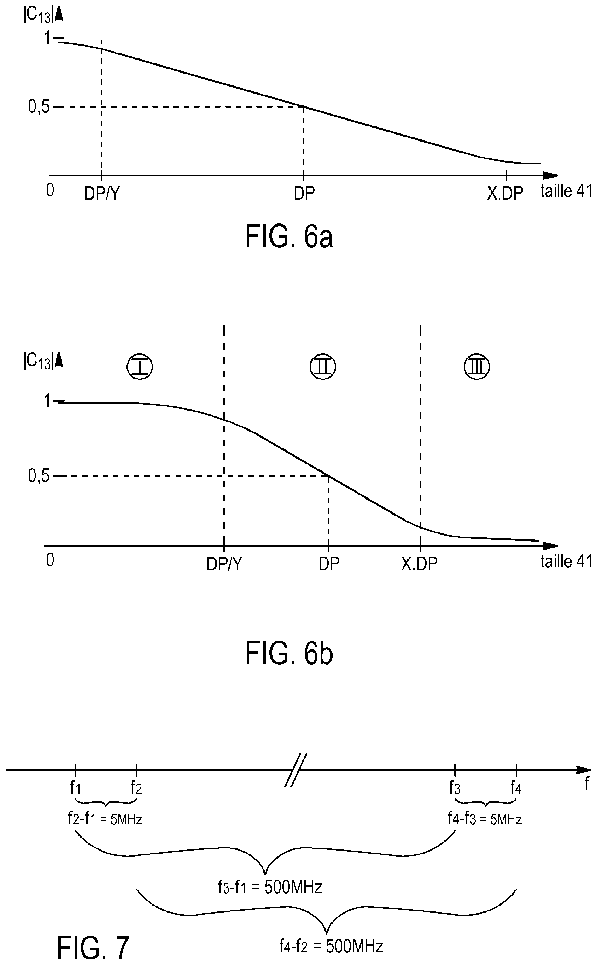

Cette deuxième fréquence de battement est telle que la longueur d'onde associée, appelée dimension prédéterminée DP, est caractéristique d'une dimension seuil 42. Par prédéterminée, l'on entend qu'elle est déterminée au préalable. Dans la suite de la description, la longueur d'onde associée à la deuxième fréquence de battement sera toujours appelée distance prédéterminée. Cette dimension prédéterminée DP est fixée de manière à centrer le domaine exploitable (région II de la **figure 6b**).

Typiquement, la deuxième fréquence de battement est comprise entre 10 MHz et 10 GHz, ce qui permet d'apprécier la dimension de blocs allant de 15 m à 1,5 cm.

La **figure 5** montre un exemple de répartition de ces fréquences selon l'invention.

Dans une deuxième étape **P2**, le récepteur 20 reçoit les ondes réfléchies $S_1$, $S_2$, $S_3$.

Dans une troisième étape **P3**, l'unité de traitement 30 analyse les ondes réfléchies $S_1$, $S_2$, $S_3$ pour détecter un éventuel mouvement du rocher 40 du site ainsi que la dimension 41 dudit rocher 40. L'obtention des positions radiales successives du rocher 40 permet de connaître sa trajectoire radiale dans case distance et *in fine* dans le site.

Plus précisément, l'étape **P3** comprend les sous-étapes suivantes :
D'une manière facultative, comme représenté en pointillé sur la **figure 4,** la sous-étape **P31** consiste à filtrer les ondes réfléchies pour supprimer les composantes des ondes qui sont caractéristiques d'objets fixes ou quasi-fixes. En effet, dans le site, se trouvent des objets fixes tels que des éléments rocheux stables ou quasi-fixes, tels que la végétation. Par quasi-fixe, on entend une vitesse de déplacement qui permet de discriminer une chute d'objet de la végétation ou d'animaux, par exemple cette vitesse est inférieure à quelques mètres par seconde, typiquement 3m/s. Le filtrage se fait typiquement à l'aide d'un filtre passe-haut. Le filtrage permet ainsi d'éliminer le bruit.

La sous-étape **P32** consiste quant à elle à effectuer des corrélations entre les différentes ondes réfléchies $S_1$, $S_2$, $S_3$ pour obtenir la position, puis la trajectoire, dans la case distance S, du rocher 40 et la dimension 41 du rocher 40. Plus précisément, l'argument d'une moyenne temporelle de corrélation entre deux ondes correspondant la première fréquence de battement (ici $S_1$ et $S_2$) permet de connaître les positions radiales successives et donc la trajectoire, ici la trajectoire radiale, de l'éventuel rocher 40 en mouvement et le module d'une moyenne temporelle de corrélation entre deux ondes correspondant la deuxième fréquence de battement (ici $S_1$ et $S_3$, $S_2$ et $S_3$) permet de caractériser la dimension 41 du rocher 40 en mouvement grâce à la dimension prédéterminé DP.

On connaît la phase en évaluant $Arg(<S_i.S_j^*>)$, où « Arg » est l'argument, « <> » représente une moyenne temporelle, $S_i$ et $S_j$ sont les ondes réfléchis sous forme complexe et « * » symbolise le conjugué complexe.

En effet, la position radiale du rocher 40 est obtenue par technique classique d'interférométrie dans le domaine fréquentiel. Lorsque l'on émet les deux ondes électromagnétiques $E_1$, $E_2$ vers le rocher 40 en mouvement, la phase du produit de corrélation (correspondant au déphasage) mesuré entre les deux ondes de retour $S_1$, $S_2$ est proportionnelle à la première fréquence de battement $f_2-f_1$ et au déplacement radial du rocher 40 en mouvement. Ainsi, si l'on ne peut garantir que la phase est comprise entre 0 et 360°, il existe une ambiguïté sur la position radiale du rocher 40.

En ce qui concerne la caractérisation de la dimension 41 du rocher 40, la moyenne temporelle de la corrélation entre deux signaux correspondant à la deuxième fréquence de battement est normalisée par la racine du produit des moyennes temporelles des auto-corrélations de deux ondes $S_1$, $S_j$ pour définir le coefficient $C_{ij}$. Ainsi, par exemple pour $S_1$ et $S_3$, le coefficient de corrélation $C_{13}$ est défini par :

$$C_{13} = \frac{\langle S_1.S_3^* \rangle}{\sqrt{\langle S_1.S_1^* \rangle \langle S_3.S_3^* \rangle}}$$

Les **figures 6a** et **6b** illustrent la courbe du module du coefficient de corrélation de deux ondes correspondant à la deuxième fréquence de battement ($C_{13}$, $C_{23}$ par exemple) en fonction de la dimension 41 du rocher 40. Cette valeur est continue et décroissante. Le coefficient $C_{13}$ tend vers 0 (ondes non corrélées) quand la dimension 41 du rocher 40 croit au-delà de la dimension prédéterminée DP et ce module tend vers 1 (ondes corrélées) quand la dimension 41 du rocher 40 décroît en deçà de la dimension prédéterminée DP. La courbe présente des effets de seuil en extrémité et une plage de décroissance manifeste se trouve entre DP/Y et X.DP, avec typiquement X=Y=2. Dans cette zone la courbe de la **figure 6b** exploitable car il est nécessaire qu'il reste une pente assez forte.

Plus précisément, le module du coefficient de corrélation entre deux ondes correspondant à la deuxième fréquence de battement ($S_1$ et $S_3$, $S_2$ et $S_3$ par exemple) est égal à environ 0,5 quand la dimension 41 du rocher 40 est sensiblement égale à la dimension prédéterminée DP. La valeur du module du coefficient par rapport à 0,5 permet de savoir si la dimension 41 du rocher 40 est supérieure ou inférieure à la dimension prédéterminée DP. Il n'est néanmoins pas nécessaire que la dimension seuil 41 soit égale à la dimension prédéterminée DP.

On définit trois intervalles dans la courbe 6b, le premier intervalle I allant de 0 à DP/Y, le deuxième intervalle II allant de DP/Y à X.DP, le troisième intervalle III allant de X.DP à l'infini.

Dans le premier intervalle I, le module du coefficient est quasi-constant et égal à 1, ce qui permet de conclure que l'objet 40 en mouvement est de dimension 41 largement inférieure à la dimension prédéterminée DP. En revanche, si la dimension seuil 42 se situe dans le deuxième intervalle II, on peut dans ce cas estimer la dimension 41 de l'objet 40 en mouvement à partir du coefficient de corrélation et donc la comparer à la dimension seuil 42. Enfin, dans le troisième intervalle III, de la très faible corrélation, il est possible de conclure que la dimension 41 est largement supérieure à DP.

Pour pouvoir obtenir une estimation de la dimension 41 de l'objet 40 et pour pouvoir comparer des dimensions 41 du même ordre de grandeur que la dimension seuil 42, il est nécessaire de fixer la dimension prédéterminée DP de sorte que la dimension seuil 42 se trouve dans le deuxième intervalle II.

Ainsi, d'une façon préférentielle, la dimension prédéterminée (et donc notamment la deuxième fréquence de battement) est choisie de sorte que la dimension seuil 42 se trouve dans le deuxième intervalle II.

Par exemple, on peut choisir une dimension prédéterminée DP égale à la dimension seuil 42 car c'est aux alentours de cette valeur que le module du coefficient offre le plus de sensibilité (pente maximale) pour évaluer la dimension 41.

Dans l'exemple des voies de chemins de fer, il est nécessaire de pouvoir différencier des objets 40 du même ordre de grandeur (10 cm et 20 cm si la dimension seuil 42 est fixée à 15 cm par exemple).

Par erreurs d'incertitude, de mesure et de modèle, on entend que la valeur du module du coefficient de corrélation pour deux ondes correspondant à la deuxième fréquence de battement possède un degré de précision limité dû au bruit sur les mesures et de modèle (un objet 40 possède une forme complexe et ne peut être simplement décrit pas la dimension 41, etc.).

Mode de réalisation complémentaire

Selon un autre mode de réalisation, complémentaire au procédé précédent et indiqué en pointillé sur la **figure 4,** durant l'étape P1, on émet en outre une quatrième onde E4, à la fréquence $f_4$ définie telle que $|f_4-f_3| = |f_2-f_1|$, et donc $|f_4-f_2| = |f_3-f_1|$. La fréquence $f_4$ est représentée en **figure 7.**

Ainsi, les ondes réfléchies $S_1$, $S_2$, $S_3$, $S_4$ forment deux fois deux couples de fréquences : $S_1$, $S_2$ et $S_3$, $S_4$ ont la même première fréquence de battement et $S_1$, $S_3$ et $S_2$, $S_4$ ont la même deuxième fréquence de battement.

Grâce à l'onde $S_4$, on dispose pour la première et la deuxième fréquences de battement d'un couple de ondes réfléchies, à la fois pour évaluer la trajectoire et pour évaluer la dimension 41 du rocher 40. En effet, dans le cas du rocher 40 en mouvement, les modules des coefficients de corrélation des ondes ayant la deuxième fréquence de battement ($C_{13}$ et $C_{24}$) sont censés donner deux valeurs similaires puisqu'ils correspondent à la même deuxième fréquence de battement. Si ce n'est pas le cas, alors on peut considérer que le modèle utilisé n'est pas valide, ce qui peut signifier par exemple que plusieurs rochers 40 sont en mouvement dans la case distance S. De la même façon, l'analyse des phases des moyennes temporelles des corrélations entre deux ondes ayant la première fréquence de battement ($S_1$, $S_2$ et $S_3$, $S_4$) est censée donner deux valeurs similaires.

Si ce n'est pas le cas, comme précédemment, le modèle d'un objet unique en mouvement doit être remis en cause

Dans une étape **P4**, comme décrit précédemment et illustré en pointillé sur la **figure 4,** les phase et modules des corrélations des couples d'ondes réfléchies ayant les mêmes fréquences de battement sont comparés pour évaluer l'unicité de l'objet 40 en mouvement.

Il est aussi possible d'émettre d'autres ondes de sorte que les fréquences de battement soient égales à la première ou à la deuxième fréquence de battement, pour multiplier les contrôles et ainsi savoir si les données sont fiables et s'il y a un seul ou plusieurs objets 40 en mouvement.

La surveillance l'ensemble des cases distances S d'un site dans une zone permet d'avoir l'ensemble de la trajectoire radiale de l'objet 40 sur toute la zone.

En particulier, dans le cas des lignes de chemins de fer, cela permet d'anticiper l'impact du rocher et la gestion de l'alerte.

**Revendications**

1.  Procédé de surveillance d'une cellule élémentaire (S) d'un site, au moyen d'un dispositif (1) de surveillance comprenant un émetteur (10) et un récepteur (20) d'ondes électromagnétiques, **caractérisé par** les étapes suivantes mises en œuvre dans une unité (30) de traitement :

    a) émission vers la cellule élémentaire à surveiller (S), au moyen de l'émetteur (10), d'au moins trois ondes électromagnétiques ($E_1$, $E_2$, $E_3$) de fréquences respectives ($f_1$, $f_2$, $f_3$) différentes et telles que la longueur d'onde associée à une première fréquence de battement définie par la différence ($|f_2-f_1|$) entre une première et une deuxième desdites fréquences est supérieure à la taille radiale (r) de la cellule élémentaire (S);
    b) réception cohérente, au moyen du récepteur (20), des ondes réfléchies ($S_1$, $S_2$, $S_3$) issues de la réflexion des ondes ($E_1$, $E_2$, $E_3$) sur la cel-

lule surveillée ;

c) traitement des ondes réfléchies ($S_1$, $S_2$, $S_3$) pour détecter un mouvement d'un objet (40) comprenant une dimension, en rotation et diffractant, dans la cellule élémentaire (S) et estimer sa position dans la cellule élémentaire (S), ledit traitement déterminant

l'argument d'une moyenne temporelle d'une corrélation entre deux ondes correspondant à la première fréquence de battement pour en déduire la position de l'objet (40) en mouvement,

le module d'une moyenne temporelle d'une corrélation entre deux ondes correspondant à une deuxième fréquence de battement pour en déduire la dimension (41) de l'objet (40) en mouvement, ladite deuxième fréquence de battement étant définie par la différence entre la troisième des trois fréquences et l'une des deux autres.

2. Procédé selon la revendication précédente, dans lequel ledit traitement est adapté pour caractériser la dimension (41) dudit objet (40) par rapport à une dimension seuil (42) comprise entre la moitié de la longueur d'onde associée à la deuxième fréquence de battement et deux fois celle-ci.

3. Procédé selon l'une quelconque des revendications précédentes, dans lequel dans lequel ledit traitement est adapté pour estimer la dimension (41) dudit objet (40) si ladite dimension (41) est comprise entre la moitié de la longueur d'onde associée à la deuxième fréquence de battement et deux fois celle-ci.

4. Procédé selon l'une des revendications précédentes, dans lequel on émet, outre les trois ondes ($E_1$, $E_2$, $E_3$), une quatrième onde ($E_4$) dont la fréquence ($f_4$) est telle que la fréquence de battement ($|f_4-f_3|$) définie par la différence entre la troisième fréquence et cette quatrième fréquence est égale à la première fréquence de battement ($|f_2-f_1|$), la fréquence de battement définie comme la différence entre cette quatrième fréquence et l'une des deux premières étant égale à la deuxième fréquence de battement, le procédé comprenant la réception de l'onde réfléchie ($S_4$) par le récepteur (20) après réflexion de l'onde émise ($E_4$), le traitement mettant en œuvre une vérification de ce que le mouvement détecté est relatif à un unique objet.

5. Procédé selon la revendication précédente, dans lequel la vérification de ce que le mouvement détecté est relatif à un unique objet met en œuvre une comparaison des corrélations entre les ondes réfléchies correspondant à la première fréquence de battement ($S_1$, $S_2$ ; $S_3$, $S_4$) et/ou les ondes réfléchies correspondant à la deuxième fréquence de battement ($S_1$, $S_3$ et $S_2$, $S_4$).

6. Procédé selon l'une des revendications précédentes, dans lequel le traitement des ondes réfléchies comprend une étape de filtrage passe-haut des ondes réfléchies pour supprimer des composantes desdites ondes réfléchies sur au moins un objet(s) fixe(s) ou quasi-fixe(s) dans la cellule élémentaire (S).

7. Procédé selon l'une des revendications précédentes, dans lequel la deuxième fréquence de battement est comprise entre 10 MHz et 10 GHz, la longueur d'onde associée (DP) étant comprise entre 15 mm et 15 m.

8. Procédé selon l'une des revendications précédentes, dans lequel la première fréquence de battement ($|f_2-f_1|$) est comprise entre 0,1 MHz et 100 MHz, la taille radiale (r) de la cellule élémentaire (S) à surveiller étant comprise entre 1m et 1km.

9. Dispositif (1) de surveillance d'une cellule élémentaire comprenant :

- un émetteur d'ondes électromagnétiques (10), configuré pour émettre des ondes électromagnétiques,
- un récepteur cohérent d'ondes électromagnétiques (20), configuré pour recevoir des ondes électromagnétiques réfléchies,
- une unité de traitement configurée pour mettre en œuvre un procédé selon l'une des revendications précédentes.

## Patentansprüche

1. Überwachungsverfahren einer Einzelzelle (S) eines Situs mittels einer Überwachungsvorrichtung (1), umfassend einen Sender (10) und einen Empfänger (20) von elektromagnetischen Wellen, **gekennzeichnet durch** die folgenden Schritte zur Umsetzung in einer Verarbeitungseinheit (30):

a) Emission von wenigstens drei elektromagnetischen Wellen ($E_1$, $E_2$, $E_3$) jeweils unterschiedlicher Frequenzen ($f_1$, $f_2$, $f_3$) mittels des Senders (10) auf die zu überwachende Einzelzelle (S), und die derart sind, dass eine erste Mischfrequenz, die durch den Unterschied ($|f_2-f_1|$) zwischen einer ersten und einer zweiten der genannten Frequenzen definiert ist, höher ist als die radiale Größe (r) der Einzelzelle (S);

b) kohärenter Empfang der reflektierten Wellen (S1, S2, S3) mittels des Senders (20), die aus der Reflexion der Wellen ($E_1$, $E_2$, $E_3$) auf der

überwachten Zelle hervorgegangen sind;

c) Verarbeitung der reflektierten Wellen ($S_1$, $S_2$, $S_3$) zum Detektieren einer Bewegung eines eine Abmessung umfassenden Objekts (40) in Rotation und Beugung in der Einzelzelle (S) und Schätzen ihrer Position in der Einzelzelle (S), wobei die genannte Verarbeitung bestimmt

das Argument eines zeitlichen Mittels einer Korrelation zwischen zwei Wellen, die der ersten Mischfrequenz entsprechen, um daraus die Position des Objekts (40) in der Bewegung zu abzuleiten, das Modul eines zeitlichen Mittels einer Korrelation zwischen zwei Wellen, die einer zweiten Mischfrequenz entsprechen, um daraus die Abmessung (41) des Objekts (40) in der Bewegung abzuleiten, wobei die genannte zweite Mischfrequenz durch den Unterschied zwischen der dritten der drei Frequenzen und einer der zwei anderen definiert ist.

2. Verfahren gemäß dem voranstehenden Anspruch, bei dem die genannte Verarbeitung geeignet ist, um die Abmessung (41) des genannten Objekts (40) im Verhältnis zu einer Schwellenabmessung (42) zu charakterisieren, die zwischen der Hälfte der der zweiten Mischfrequenz zugeordneten Wellenlänge und dem Doppelten derselben inbegriffen ist.

3. Verfahren gemäß irgendeinem der voranstehenden Ansprüche, bei dem die genannte Verarbeitung geeignet ist, um die Abmessung (41) des genannten Objekts (40) zu schätzen, wenn die genannte Abmessung (41) zwischen der Hälfte der der zweiten Mischfrequenz zugeordneten Wellenlänge und dem Zweifachen derselben inbegriffen ist.

4. Verfahren gemäß irgendeinem der voranstehenden Ansprüche, bei dem neben den drei Wellen ($E_1$, $E_2$, $E_3$) eine vierte Welle ($E_4$) gesendet wird, deren Frequenz ($f_4$) derart ist, dass die Mischfrequenz ($|f_4-f_3|$), die von dem Unterschied zwischen der dritten Frequenz und dieser vierten Frequenz definiert ist, gleich der ersten Mischfrequenz ($|f_2-f_1|$) ist, wobei die als der Unterschied zwischen dieser vierten Frequenz und einer der zwei ersten definierten Mischfrequenz gleich der zweiten Mischfrequenz ist, wobei das Verfahren den Empfang der Welle ($S_4$) umfasst, die von dem Sender (20) nach der Reflexion der gesendeten Welle ($E_4$) reflektiert ist, wobei die Verarbeitung eine Überprüfung darüber umsetzt, dass die erfasste Bewegung sich auf ein einziges Objekt bezieht.

5. Verfahren gemäß dem voranstehenden Anspruch, bei dem die Überprüfung darüber, dass die erfasste Bewegung sich auf ein einziges Objekt bezieht, einen Vergleich der Korrelationen zwischen den reflektierten Wellen, die der ersten Mischfrequenz ($S_1$, $S_2$; $S_3$, $S_4$) entsprechen, und / oder den reflektierten Wellen, die der zweiten Mischfrequenz ($S_1$, $S_3$ und $S_2$, $S_4$) entsprechen, umsetzt.

6. Verfahren gemäß einem der voranstehenden Ansprüche, bei dem die Verarbeitung der reflektierten Wellen einen Schritt zum Hochpassfiltern der reflektierten Wellen umfasst, um Bestandteile der genannten reflektierten Wellen auf wenigstens einem / mehreren festen oder quasi festen Objekt(en) in der Einzelzelle (S) zu beseitigen.

7. Verfahren gemäß einem der voranstehenden Ansprüche, bei dem die zweite Mischfrequenz zwischen 10 MHz und 10 GHz inbegriffen ist, wobei die zugeordnete Wellenlänge (DP) zwischen 15 mm und 15 m inbegriffen ist.

8. Verfahren gemäß einem der voranstehenden Ansprüche, bei dem die erste Mischfrequenz ($|f_2-f_1|$) zwischen 0,1 MHz und 100 MHz inbegriffen ist, wobei die radiale Größe (r) der zu überwachenden Einzelzelle zwischen 1 m und 1 km inbegriffen ist.

9. Überwachungsvorrichtung (1) einer Einzelzelle, umfassend:

- einen Sender elektromagnetischer Wellen (10), der zum Senden der elektromagnetischen Wellen konfiguriert ist,
- einen kohärenten Empfänger von elektromagnetischen Wellen (20), der zum Empfangen der reflektierten elektromagnetischen Wellen konfiguriert ist,
- eine Verarbeitungseinheit, die zum Umsetzen eines Verfahrens gemäß einem der voranstehenden Ansprüche konfiguriert ist.

**Claims**

1. Method of monitoring an elementary cell (S) of a site, by means of a monitoring device (1) comprising an emitter (10) and a receiver (20) of electromagnetic waves, **characterised by** the following steps implemented in a treatment unit (30):

a) emission towards the elementary cell to be monitored (S), by means of the emitter (10), of at least three electromagnetic waves ($E_1$, $E_2$, $E_3$) of different respective frequencies ($f_1$, $f_2$, $f_3$) and such that the wavelength associated with a first beat frequency defined by the difference ($|f_2-f_1|$) between a first and a second of said frequencies is greater than the radial size (r) of the elementary cell (S);

b) coherent reception, by means of the receiver (20), of the reflected waves ($S_1$, $S_2$, $S_3$) coming

from the reflection of the waves ($E_1$, $E_2$, $E_3$) on the monitored cell;

c) treatment of the reflected waves ($S_1$, $S_2$, $S_3$) so as to detect the motion of an object (40) comprising one dimension, in rotation and scattering, in the elementary cell (S) and estimating the position thereof in the elementary cell (S), said treatment determining the argument of a temporal means of a correlation between two waves corresponding to the first beat frequency in order to deduce therefrom the position of the object (40) in motion,

the module of a temporal means of a correlation between two waves corresponding to a second beat frequency so as to deduce therefrom the dimension (41) of the object (40) in motion, said second beat frequency being defined by the difference between the third of the three frequencies and one of the other two.

2. Method according to the preceding claim, wherein said treatment is adapted to characterise the dimension (41) of said object (40) with respect to a threshold dimension (42) between half of the wavelength associated with the second beat frequency and twice the latter.

3. Method according to any preceding claim, wherein said treatment is suitable for estimating the dimension (41) of said object (40) if said dimension (41) is between half of the wavelength associated with the second beat frequency and twice the latter.

4. Method according to one of the preceding claims, wherein is emitted, in addition to the three waves ($E_1$, $E_2$, $E_3$), a fourth wave ($E_4$) of which the frequency ($f_4$) is such that the beat frequency ($|f_4-f_3|$) defined by the difference between the third frequency and this fourth frequency is equal to the first beat frequency ($|f_2-f_1|$), with the beat frequency defined as the difference between this fourth frequency and one of the first two being equal to the second beat frequency, with the method comprising the reception of the reflected wave ($S_4$) by the receiver (20) after reflection of the emitted wave ($E_4$), the treatment implementing a verification in that the motion detected is relative to a single object.

5. Method according to the preceding claim, wherein the verification of that the motion detected is relative to a single object implements a comparison of the correlations between the reflected waves corresponding to the first beat frequency ($S_1$, $S_2$, $S_3$, $S_4$) and/or the reflected waves corresponding to the second beat frequency ($S_1$, $S_3$ and $S_2$, $S_4$).

6. Method according to one of the preceding claims, wherein the treatment of the reflected waves comprises a step of high-ass filtering of the reflected waves in order to suppress components of said reflected waves on at least one fixed or quasi-fixed object or objects in the elementary cell (S).

7. Method according to one of the preceding claims, wherein the second beat frequency is between 10 MHz and 10 GHz, with the associated wavelength (DP) being between 15 mm and 15 m.

8. Method according to one of the preceding claims, wherein the first beat frequency ($|f_2-f_1|$) is between 0.1 MHz and 100 MHz, with the radial size (r) of the elementary cell (S) to be monitored being between 1m and 1km.

9. Device (1) for monitoring an elementary cell comprising:

- an emitter of electromagnetic waves (10), configured to emit electromagnetic waves,
- a coherent receiver of electromagnetic waves (20), configured to receive reflected electromagnetic waves,
- a treatment unit configured to implement a method according to one of the preceding claims.

FIG. 1

FIG. 2

FIG. 3

P1 : émission des ondes E1, E2, E3

émission d'une quatrième onde E4

P2 : réception des ondes émises

P3 : traitement des ondes

P31 : filtrage passe-haut

P32 : calculs de corrélation pour obtention de la position et de la dimension de l'objet

P4 : Comparaison de résultats

## FIG. 4

$f_1$    $f_2$    $f_3$    $f$

$f_2-f_1 = 5MHz$

$f_3-f_1 = 500MHz$

## FIG. 5

$|C_{13}|$

1

0,5

0    DP/Y                    DP                    X.DP    taille 41

FIG. 6a

$|C_{13}|$

Ⅰ          Ⅱ          Ⅲ

1

0,5

0          DP/Y          DP          X.DP          taille 41

FIG. 6b

$f_1$    $f_2$                              $f_3$    $f_4$    f

$f_2 - f_1 = 5MHz$                    $f_4 - f_3 = 5MHz$

$f_3 - f_1 = 500MHz$

FIG. 7

$f_4 - f_2 = 500MHz$

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4300121 A

- EP 0811854 A

**Littérature non-brevet citée dans la description**

- **HUI ZHANG et al.** Three-frequency principle for automotive radar system. *PROCEEDINGS. 2004 IEEE RADIO AND WIRELESS CONFERENCE (IEEE CAT. N0.04TH8746),* 01 Janvier 2004, ISBN 978-0-78-038451-4, 315-318

- CW and Frequency-Modulated Radar. **MERRILL I. SKOLNIK.** Introduction To Radar Systems. McGraw Hill, 01 Janvier 1981, 68-100